# EUROPÄISCHE PATENTSCHRIFT

(11) **EP 4 030 885 B1**
(45) Veröffentlichungstag und Bekanntmachung des Hinweises auf die Patenterteilung: **09.08.2023**
(21) Anmeldenummer: 20780573.0
(22) Anmeldetag: 10.09.2020
(51) Int. Cl.: A01D 41/14

(54) **SCHNEIDWERK MIT LÄNGSBEWEGLICHEM ABSTÜTZELEMENT ZUR ABSTÜTZUNG EINER FÖRDERFLÄCHE**
CUTTING ASSEMBLY WITH LONGITUDINAL MOVABLE SUPPORTS FOR SUPPORTING A CONVEYOR
BARRE DE COUPE À SUPPORT LONGITUDINAUX MOBILES POUR SUPPORT DE CONVOYEUR

(30) Priorität: 19.09.2019 DE 102019125279
(43) Veröffentlichungstag der Anmeldung: 27.07.2022
(73) Patentinhaber: Carl Geringhoff GmbH & Co. KG, 59227 Ahlen (DE)
(72) Erfinder: SUDHUES, Steffen, 59227 Ahlen (DE); HEITKAMP, Alexander, 48249 Dülmen (DE); POKRIEFKE, Michael, 27798 Hude (DE)
(74) Vertreter: Weeg, Thomas
(86) Internationale Anmeldenummer: PCT/EP2020/075389
(87) Internationale Veröffentlichungsnummer: WO 2021/052867

(56) Entgegenhaltungen:
- DE-A1-102011 116 341
- US-A- 6 029 429
- US-A1- 2009 320 431
- US-B1- 8 484 939

## Beschreibung

Die vorliegende Erfindung bezieht sich auf ein Schneidwerk nach dem Oberbegriff des Anspruchs 1.

Aus dem Stand der Technik sind verschiedene Lösungen bekannt, wie die Schwingen gegenüber dem Rahmen höhenbeweglich gemacht werden. So ist es beispielsweise aus der Schrift US 4,660,360 A bekannt, einen Messerbalken mit einer Anzahl damit verbundenen nebeneinander angeordneten Messerklingen als Schneidelement an einer Anzahl von Profilträgern als Schwingen zu befestigen, die an einer jeweiligen Schwenkachse beweglich am Rahmen gehalten sind. Aus der Schrift US 4,414,793 ist ein Schneidwerk bekannt, bei dem eine Anzahl federnder Elemente das Schneidelement halten. Die Höhenbeweglichkeit der Schwingen mit den daran befestigten Schneidelementen dient dem Zweck, dass sich das Schneidwerk über seine Arbeitsbreite hinweg möglichst genau an wechselnde Konturen in der Oberfläche des bearbeiteten Feldes anpassen kann. Eine gattungsgemäße Lösung ist aus der Schrift US 2009/320431 bekannt.

Bei den Auf- und Abwärtsbewegungen der einzelnen Schwingen mit den daran befestigten Schneidelementen besteht das Problem, dass sich dadurch die Abstände zwischen den Schneidelementen und den nachgeordneten Förderflächen zur Abförderung des geschnittenen Ernteguts verändern. Bei den nachgeordneten Förderflächen kann es sich um einen Schneidwerksboden handeln, über den das geschnittene Erntegut mit Förderorganen wie beispielsweise einer Förderschnecke hinweg befördert wird, oder es handelt sich um ein aktiv angetriebenes Förderorgan, wie beispielsweise einen Bandförderer, der das geschnittene Erntegut nach hinten oder zur Seite abfördert. Durch Ein- und Ausfederbewegungen einer Schwinge ergeben sich nicht nur Veränderungen in der räumlichen Lage der Förderflächen in vertikaler Richtung, sondern auch in horizontaler Richtung. Das gilt insbesondere dann, wenn sich die Förderfläche den Übergang von den Schneidelementen zur Förderfläche abdichtend an die Schneidelemente anschließt, dann muss die Förderfläche in horizontaler Richtung jede Bewegung mitmachen, die die Schneidelemente ausführen, um Erntegutverluste zu vermeiden, wenn sich die Förderfläche mit der Schwinge mitbewegt. Bei einer Bewegung der Förderflächen entsteht allerdings ein Problem, wie die Förderflächen auf geeignete Weise abgestützt werden können. Zudem entsteht an der den Schneidelementen abgewandten Seite der Förderflächen ein Abdichtungsproblem gegen Erntegutverluste. Sind die Förderflächen starr mit dem Rahmen verbunden, entstehen im Übergang von den Schneidelementen zur Förderfläche Abdichtungsprobleme.

Es ist die Aufgabe der vorliegenden Erfindung, eine Lösung für eine verbesserte Abstützung von bewegten Förderflächen zu finden.

Die Aufgabe wird für ein gattungsgemäßes Schneidwerk mit den kennzeichnenden Merkmalen des Anspruchs 1 gelöst.

Über die längsbeweglich an den Schwingen befestigten Abstützelemente ist es möglich, die Förderflächen bei Bewegungen besser abzustützen. Wenn eine feste oder zumindest annähernd gleich bleibende räumliche Beziehung zwischen dem Abstützelement und der Förderfläche beibehalten werden soll, ist es vorteilhaft, wenn zumindest eines der Abstützelemente längsbeweglich mit der Schwinge verbunden ist, weil das Abstützelement dann den Bewegungen der Förderfläche in horizontaler Richtung durch seine entsprechende Beweglichkeit folgen kann. Die Längsbeweglichkeit soll dabei insbesondere in die Arbeitsrichtung und entgegen der Arbeitsrichtung des Schneidwerks gegeben sein. Die Beweglichkeit in vertikaler Richtung ist über die Verbindung mit der höhenbeweglichen Schwinge gegeben, über die sich das oder die daran befestigten Abstützelemente mitbewegen.

Bei Schwenkbewegungen der Schwinge bewegt sich das Abstützelement entlang der Längsachse der Schwinge. Das Abstützelement kann die Schwinge umgreifen, um sich durch den Formschluss geführt entlang der Schwinge zu bewegen, und/oder das Abstützelement ist durch Nuten in der Schwinge geführt, in die Federn hineinragen, die an dem Abstützelement ausgebildet sind.

Das Abstützelement kann fest mit der Förderfläche verbunden sein, es ist aber auch möglich, am Abstützelement nur eine Abstützfläche auszubilden, auf die die Förderfläche aufgelegt ist, oder die Förderfläche und das Abstützelement sind über ein bewegliches Koppelelement miteinander verbunden, das Relativbewegungen zwischen dem Abstützelement und der Förderfläche zulässt.

Nach einer Ausgestaltung der Erfindung sind eine oder mehrere der Schwingen als Blattfederpakete ausgebildet. Blattfederpakete erlauben eine besonders feinfühlige und flexible Anpassung der Höhenlage der Schneideinrichtung.

Nach einer Ausgestaltung der Erfindung sind die Förderflächen so im Schneidwerk befestigt, dass die den Schneidelementen zugewandte Vorderkante der Förderflächen auch bei Höhenbewegungen der Schneidelemente in einer gleich bleibenden räumlichen Beziehung zu den Schneidelementen bleibt. Dadurch kann der Übergang zwischen den Schneidelementen und den Förderflächen optimal gestaltet werden, und diese optimale Gestaltung ändert sich auch nicht durch Bewegungen der Schneidelemente. Auf Konstruktionen, die bei Bewegungen entstehende Spalte und Stufen abdecken sollen, kann verzichtet werden. Insbesondere wenn beweglich angetriebene Förderflächen wie Bandförderer verwendet werden, können die förderaktiven Flächen dichter an die Schneidelemente heranreichend positioniert werden, wodurch die Abförderung des geschnittenen Erntegut unmittelbar nach dem Schnitt verbessert wird. Erntegutverluste werden dadurch weiter minimiert.

Nach einer Ausgestaltung der Erfindung ist das längsbewegliche Abstützelement in seiner Bewegung durch eine oder mehrere Koppelstangen beweglich angetrieben, die im vorderen Abschnitt der Schwinge oder des Schneidelements abgestützt sind. Die Koppelstangen sind in sich starr und definieren einen durch ihre Länge vorgegebenen Abstand zwischen zwei Punkten. Bei mehreren hintereinander angeordneten Koppelstangen, die durch eine bewegliche Achse verbunden sind, ergeben sich zwar geringfügige Längenveränderungen der Koppelstangen durch Einknickbewegungen, diese sind jedoch vernachlässigbar. Die Koppelstangen sind drehbeweglich mit ihren Anbindungspunkten verbunden. Verkürzt sich bei Aufwärts- oder Abwärtsbewegung der Schwinge der Abstand zwischen dem vorderen Abschnitt der Schwinge oder des Schneidelements und dem Punkt, an dem sich aktuell das mit den Koppelstangen verbundene Abstützelement befindet, so schieben die Koppelstangen das Abstützelement an der Schwinge entlang nach hinten, so dass der Abstand zwischen dem vorderen Abschnitt der Schwinge oder des Schneidelements und dem Abstützelement zumindest annähernd gleich bleibt. Schwingt die Schwinge in ihre Ausgangsstellung zurück und vergrößert sich dabei der Abstand zwischen dem vorderen Abschnitt der Schwinge oder des Schneidelements und dem Punkt, an dem sich aktuell das mit den Koppelstangen verbundene Abstützelement befindet, so ziehen die Koppelstangen das Abstützelement an der Schwinge entlang wieder nach vorne. Die Koppelstangen übertragen auf diese Weise eine Bewegung des Schneidelements bei Ein- und Ausfederbewegungen in Längsrichtung auf das Abstützelement. Mit der Abstützung im Bereich des vorderen Abschnitts der Schwinge ist ein Bereich gemeint, der dem von der Koppelstange bewegten Abstützelement vorgelagert ist. Je näher die vordere Abstützung der Koppelstange zum Schneidelement liegt, umso geringer fallen die Längendifferenzen aus, die sich infolge von Schwingungsbewegungen des Schneidelements im Verhältnis zum längsbeweglichen Abstützelement ergeben. Aber auch bei einer Abstützung des vorderen Endes der Koppelstange im mittleren Bereich der Schwinge ergeben sich brauchbare Verschiebebewegungen des Abstützelements. Das gilt insbesondere auch dann, wenn ein Teil des Abstands zwischen dem längsbeweglichen Abstützelement und dem Schneidelement durch ein anderes starres Bauteil als einer Koppelstange überbrückt ist. Als Koppelstange im Sinne dieser Erfindung kann beispielsweise auch die Welle eines Bandförderers fungieren, um die der Bandförderer umläuft oder über die die Oberseite des Bandförderers abgestützt ist.

Nach einer Ausgestaltung der Erfindung ist mit dem längsbeweglichen Abstützelement ein Halteelement verbunden, das die bewegliche Förderfläche begrenzt und über Mitnehmer führt. Die Verbindung kann starr oder beweglich ausgestaltet sein. Durch seine Längsbeweglichkeit ist das Abstützelement gut dazu geeignet, auch bei Bewegungen der Förderfläche in horizontaler Richtung sicherzustellen, dass die Förderfläche dabei geführt ist. Das gilt insbesondere dann, wenn es sich um eine beweglich angetriebene Förderfläche handelt, wie das bei umlaufenden Förderbändern eines Draper-Schneidwerks der Fall ist. Im Halteelement kann beispielsweise eine Führungsnut ausgebildet sein, durch die ein am umlaufenden Förderband ausgebildeter und komplementär zur Führungsnut geformter Formkörper hindurchläuft. In Förderrichtung des umlaufenden Förderbands ergibt sich dadurch eine Führung, die das Förderband in der Sollposition hält. Das Halteelement kann auch dazu dienen, den Rand der Förderfläche gegen Erntegutverluste zu sichern, indem es Lücken zu angrenzenden Bauteilen schließt, beispielsweise durch entsprechende Leisten, Stege und Dichtungskörper, die auch aus einem elastischen Material hergestellt sein können.

Nach einer Ausgestaltung der Erfindung ist mit dem längsbeweglichen Abstützelement ein Halteelement verbunden, das eine bewegliche Rückwand des Förderwegs des Ernteguts über das Schneidwerk abstützt und führt. Bei Bewegungen der Förderfläche in horizontaler Richtung würden sich unterschiedlich große Spalte zwischen dem zur Rückwand benachbarten Rand der Förderfläche und der Rückwand ergeben, durch die Erntegut verloren werden kann und sich unerwünschte Materialansammlungen aufbauen könnten, die die Beweglichkeit der Bauteile einschränken und zu Beschädigungen an den Bauteilen führen könnten. Durch die beweglich gestaltete Rückwand kann diese den Bewegungen der Förderfläche in horizontaler und/oder vertikaler Richtung folgen. Indem nun das Halteelement so gestaltet ist, dass es die beweglich gestaltete Rückwand abstützt und führt, überträgt das Halteelement die Bewegungen der Schwinge auf die Rückwand. Die Rückwand bewegt sich dadurch synchron zur Förderfläche. Die Entstehung von unterschiedlich großen Spalten zwischen der Rückwand und der Förderfläche wird dadurch vermieden.

Nach einer Ausgestaltung der Erfindung dichtet das Haltelement den Übergang zwischen der Förderfläche und der Rückwand ab. Durch die zusätzliche Abdichtung werden Erntegutverluste und der Aufbau von Materialansammlungen vermieden. Die Abdichtung erfolgt vorzugsweise durch eine geschlossene Oberfläche des Halteelements im Bereich des Übergangs von der Förderfläche zur Rückwand.

Nach einer Ausgestaltung der Erfindung ist die Förderfläche von einem umlaufenden Bandförderer als Förderorgan gebildet. Derartige Bandförderer werden insbesondere in Draper-Schneidwerken verwendet, um geschnittenes Erntegut aktiv abzufördern. Gerade bei den Bandförderern ist es vorteilhaft, diese bei Bewegungen der Schneidelemente in einer festen räumlichen Beziehung zu den Schneidelementen zu halten und die umlaufenden Förderbänder von ihrer Rückseite her beweglich zu halten und zu führen.

Nach einer Ausgestaltung der Erfindung sind die Schneidelemente über einen Messerwinkel mit der Schwinge verbunden, wobei der Messerwinkel als Profilblech ausgeführt ist, den Abstand zwischen den Schneidelementen und der Förderfläche überbrückt und aus mehreren über die Arbeitsbreite des Schneidwerks aneinandergereihten Segmenten besteht, die gelenkig miteinander verbunden sind. Das Profilblech ermöglicht eine gute Befestigung der Schneidelemente, einen optimal gestalteten Übergang von den Schneidelementen zur Förderfläche, und durch die Segmente und deren gelenkige Verbindung miteinander bleiben die Schwingen, an denen die Messerwinkel befestigt sind, höhenbeweglich.

Nach einer Ausgestaltung der Erfindung sind Abstützelemente benachbarter Schwingen durch einen oder mehrere schwenkbeweglich mit den Abstützelementen verbundene Koppelstangen miteinander verbunden. Durch die Koppelstangen werden auf die Abstützelemente einwirkende Kräfte wie in einem Fachwerk auf benachbarte Abstützelemente und Schwingen übertragen, wodurch Bewegungen gedämpft und vergleichmäßigt werden können. Die schwenkbeweglichen Koppelstangen erlauben durch ihre schwenkbewegliche Anbindung zwar weiterhin Auslenkbewegungen einzelner Schwingen, sie können allzu starke Auslenkbewegungen von einzelnen Schwingen in vertikaler Richtung aber dämpfen. Die Koppelstangen sind auch dazu geeignet, einzelne Schwingen gegen eventuelle Bewegungen in eine Richtung quer zur Vorfahrtrichtung abzustützen. Die Koppelstangen sind auch dazu geeignet, Rückstellkräfte von einer Schwinge auf eine benachbarte Schwinge zu übertragen. Über die Arbeitsbreite eines Schneidwerks gesehen tragen die Koppelstangen dazu bei, dass Federbewegungen von einzelnen Schwingen gedämpft und über die Arbeitsbreite des Schneidwerks geglättet werden.

Es wird ausdrücklich darauf hingewiesen, dass die vorstehend beschriebenen Ausgestaltungen der Erfindung jeweils für sich, aber auch in beliebigen Kombinationen untereinander mit dem Gegenstand des Hauptanspruchs kombiniert werden können, soweit dem keine technisch zwingenden Hindernisse entgegen stehen.

Weitere Abwandlungen und Ausgestaltungen der Erfindung lassen sich der nach-folgenden gegenständlichen Beschreibung und den Zeichnungen entnehmen.

Die Erfindung soll nun anhand von Ausführungsbeispielen näher erläutert werden. Es zeigen:
- Fig. 1:: eine Ansicht von schräg vorne auf eine Erntemaschine mit Schneidwerk,
- Fig. 2:: eine Schnittansicht durch das Schneidwerk.

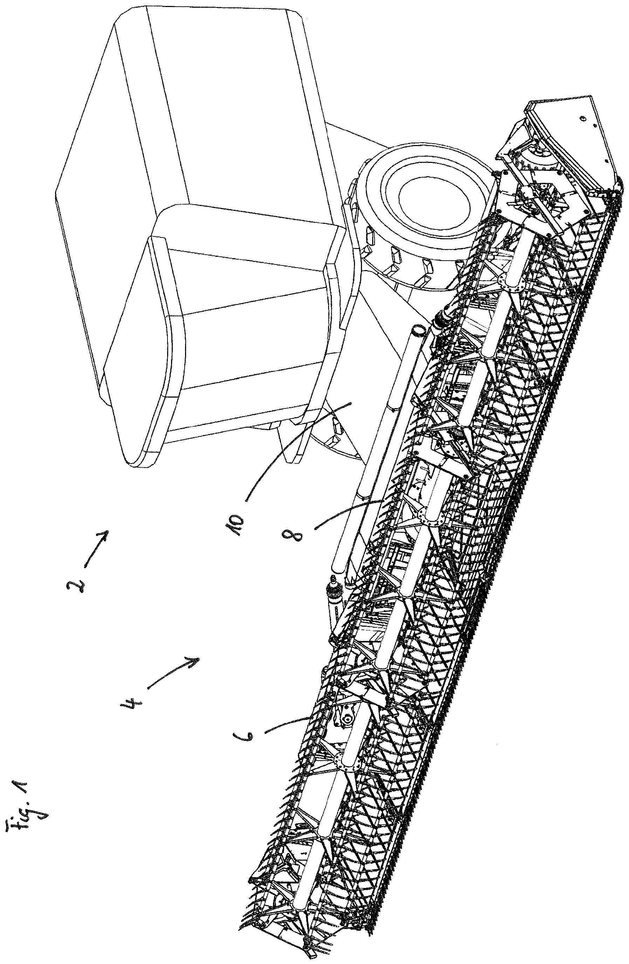

In Fig. 1 ist eine Ansicht von schräg vorne auf eine Erntemaschine 2 mit einem Schneidwerk 4 gezeigt. Das Schneidwerk 4 verfügt über einem Rahmen 6, der über einen Anbaurahmen 8 mit dem Einzugskanal 10 der Erntemaschine 2 verbunden ist.

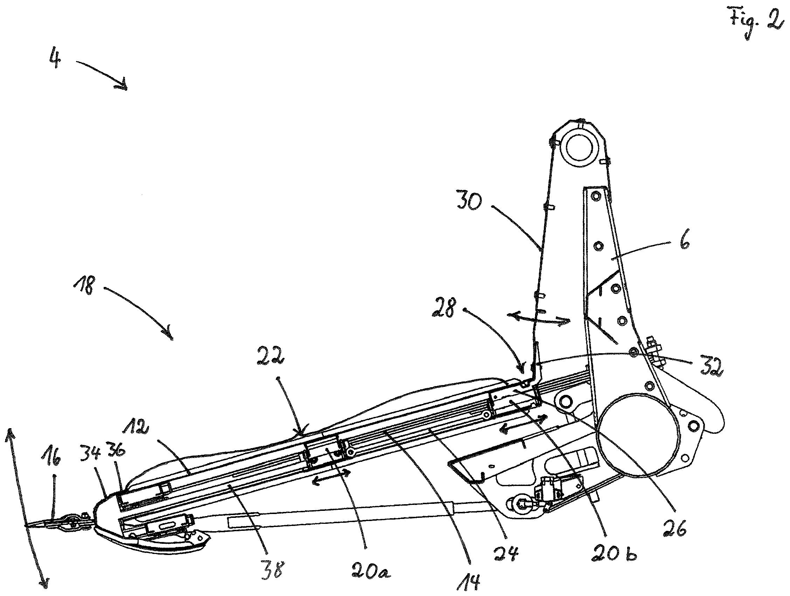

In Fig. 2 ist eine Schnittansicht durch das Schneidwerk 4 gezeigt. Als Förderorgan 12 ist in dem in Fig. 2 gezeigten Ausführungsbeispiel ein umlaufender Bandförderer gezeigt, der auf seiner Oberseite die Förderfläche 22 ausbildet. Die Erfindung ist auch bei einem Bandförderer einsetzbar, der das Erntegut entgegen der Arbeitsrichtung der Erntemaschine abfördert, wie beispielsweise einem Mittenband eines Draper-Schneidwerks. Die Förderfläche 22 muss für Zwecke der Erfindung aber nicht selbst beweglich oder beweglich angetrieben sein, sie kann auch aus einem starren Bodenblech bestehen, über das Förderorgane wie beispielsweise eine Förderschnecke das geschnittene Erntegut abfördert. Bei Aufwärts- und Abwärtsbewegungen des Schneidelements 16 und der Schwinge 14, die durch einen entsprechenden Doppelpfeil angedeutet sind, ergeben sich Veränderungen in der räumlichen Lage der Förderfläche 22. Die Schwinge 16 ist im Ausführungsbeispiel als ein Blattfederpaket ausgebildet, das eine flexible Höhenanpassung des Schneidelements 16 ermöglicht. Abweichend vom Ausführungsbeispiel können aber als Schwinge 16 aber auch starre Bauelemente wie beispielsweise ein Blechprofil verwendet sein, die über eine Schwenkachse mit dem Rahmen 6 verbunden sind und über die Schwenkachse so schwenkbeweglich sind, dass sich dabei die Höhenlage der Schneidelemente 16 verändert.

Die Förderfläche 22 wird auch in einer veränderten räumlichen Lage abgestützt und in ihrer Förderbewegung geführt. Dazu sind die Abstützelemente 20a, 20b längsbeweglich an der Schwinge 14 befestigt, was durch die eingezeichneten Doppelpfeile kenntlich gemacht ist. Die Bewegungen des längsbeweglichen Abstützelements 20b werden im Ausführungsbeispiel über die Koppelstange 24 übertragen, die mit ihrem hinteren Ende am Abstützelement 20b und mit ihrem vorderen Ende am Abstützelement 20a angreift. Das Abstützelement 20a ist über eine starre Drehmomentstütze 38 an dem vorderen Ende des Schneidwerks 4 abgestützt. Die Drehmomentstütze 38 wirkt auf diese Weise wie eine weitere Koppelstange 24. Die Koppelstange 24 und die Drehmomentstütze 38 übertragen Bewegungen des Schneidelements 16 in Längsrichtung auf die Abstützelemente 20a, 20b.

Die Abstützelemente 20a, 20b können durch ihre Längsbeweglichkeit den Bewegungen der Förderfläche 22 in einer Richtung entlang der Schwinge 14 folgen. Die Abstützung der Förderfläche 22 kann auf diese Weise auch bei Aufwärts- und Abwärtsbewegungen des Schneidelements 16 aufrechterhalten werden. Um die Förderfläche 22 bei Aufwärts- und Abwärtsbewegungen der Schwinge 14 und des Schneidelements 16 zu halten und zu führen, ist auf das hintere Abstützelement 20 ein Halteelement 26 aufgesetzt, das im Ausführungsbeispiel eine V-förmige Nut als Mitnehmer 28 aufweist. Der Bandförderer ist auf der Innenseite seines Förderbands mit einem anvulkanisierten Profil versehen, das komplementär zur Form des Mitnehmers 28 geformt ist und in den Querschnitt der V-förmigen Nut als Mitnehmer 28 eingreift. Wenn sich das Abstützelement 20b entlang der Schwinge 14 bewegt, nimmt der Mitnehmer 28 mit seiner V-förmigen Nut den Bandförderer über das anvulkanisierte Profil mit und verlagert diesen entsprechend der Längsbewegung des Abstützelements 20b nach vorne oder hinten. Dadurch bleibt die Vorderkante 36 des Bandförderers in Längsrichtung der Schwinge 14 immer in einer festen räumlichen Beziehung zu den Schneidelementen 16 und in einer abdichtenden Anlage im Verhältnis zum Schneidelement 16, so dass an der Vorderkante 36 des Bandförderers bei Bewegungen der Schwinge 14 und/oder des Schneidelements 16 keine Spalte entstehen, die Gutverluste und einen Materialaufbau verursachen könnten. Wird die Förderfläche 22 nicht durch einen umlaufenden Bandförderer, sondern ein starres Blech gebildet, kann der Mitnehmer 28 auch als ein einfaches Band, Scharnier oder dergleichen ausgebildet sein.

Das Halteelement 26 ist mit einem Steg 32 versehen, durch den Erntegutverluste über den hinteren Rand des Bandförderers vermieden werden. Der Steg 32 als Bestandteil des Halteelements 26 ist außerdem mit der beweglichen Rückwand 30 verbunden, die den Förderweg des Ernteguts über das Schneidwerk 4 nach hinten hin abstützt und dieses führt. Die bewegliche Rückwand ist über den Steg 32 vom Halteelement 26 gehalten. Die Beweglichkeit der beweglichen Rückwand 30 ist ebenfalls durch einen Doppelpfeil angedeutet. Bei Bewegungen des längsbeweglichen Abstützelements 20b nimmt das Halteelement 26 die bewegliche Rückwand 30 in der jeweiligen Bewegungsrichtung mit. Da das Halteelement 26 im Übergangsbereich zwischen der Förderfläche 22 und der Rückwand 30 eine geschlossene Oberfläche aufweist, dichtet es den Übergang zwischen der Förderfläche 22 und der Rückwand 30 ab.

Die Schneidelemente 16 sind über einen Messerwinkel 34 mit der Schwinge 14 verbunden. Der Messerwinkel 34 kann als Profilblech ausgeführt sein und überbrückt den Abstand zwischen den Schneidelementen 16 und der Förderfläche 22. Der Messerwinkel 34 kann aus mehreren über die Arbeitsbreite des Schneidwerks 4 aneinandergereihten Segmenten bestehen, die gelenkig miteinander verbunden sind.

Die Erfindung ist nicht auf die vorstehenden Ausführungsbeispiele beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

### Bezugsziffernliste

- 2: Erntemaschine
- 4: Schneidwerk
- 6: Rahmen
- 8: Anbaurahmen
- 10: Einzugskanal
- 12: Förderorgan
- 14: Schwinge
- 16: Schneidelement
- 18: vorderer Abschnitt
- 20: Abstützelement
- 22: Förderfläche
- 24: Koppelstange
- 26: Halteelement
- 28: Mitnehmer
- 30: Rückwand
- 32: Steg
- 34: Messerwinkel
- 36: Vorderkante
- 38: Drehmomentstütze

## Patentansprüche

1. Schneidwerk (4) zum Anbau an eine Erntemaschine (2) mit einem Rahmen (6), der Rahmen (6) weist in Arbeitsrichtung weisende Schwingen (14) auf, an deren vorderen Enden Schneidelemente (16) zum Schneiden des Ernteguts befestigt sind, die Schwingen (14) mit den daran befestigten Schneidelementen (16) sind gegenüber dem Rahmen (6) höhenbeweglich, und an den Schwingen (14) sind eine oder mehrere Abstützelemente (20) aufgesetzt, die oberhalb der Schwinge (14) befindliche Förderflächen (22) abstützen, **dadurch gekennzeichnet, dass** zumindest eines der Abstützelemente (20) längsbeweglich mit der Schwinge (14) verbunden ist.

2. Schneidwerk (4) nach Anspruch 1, **dadurch gekennzeichnet, dass** eine oder mehrere der Schwingen (14) als Blattfederpakete ausgebildet sind.

3. Schneidwerk (4) nach einem der vorhergehenden Ansprüche, **dadurch gekennzeichnet, dass** die Förderflächen so im Schneidwerk (4) befestigt sind, dass die den Schneidelementen (16) zugewandte Vorderkante (36) der Förderflächen (22) auch bei Höhenbewegungen der Schneidelemente (16) in einer gleich bleibenden räumlichen Beziehung zu den Schneidelementen (16) bleibt.

4. Schneidwerk (4) nach einem der vorhergehenden Ansprüche, **dadurch gekennzeichnet, dass** das längsbewegliche Abstützelement (20) in seiner Bewegung durch eine oder mehrere Koppelstangen (24) beweglich angetrieben ist, die im vorderen Abschnitt der Schwinge (14) oder des Schneidelements (16) abgestützt sind.

5. Schneidwerk (4) nach einem der vorhergehenden Ansprüche, **dadurch gekennzeichnet, dass** mit dem längsbeweglichen Abstützelement (20b) ein Halteelement (26) (26) verbunden ist, das die bewegliche Förderfläche (22) begrenzt und über Mitnehmer (28) führt.

6. Schneidwerk (4) nach einem der vorhergehenden Ansprüche, **dadurch gekennzeichnet, dass** mit dem längsbeweglichen Abstützelement (20) ein Halteelement (26) verbunden ist, das eine bewegliche Rückwand (30) des Förderwegs des Ernteguts über das Schneidwerk (4) abstützt und führt.

7. Schneidwerk (4) nach einem der vorhergehenden Ansprüche, **dadurch gekennzeichnet, dass** das Haltelement den Übergang zwischen der Förderfläche und der Rückwand (30) abdichtet.

8. Schneidwerk (4) nach einem der vorhergehenden Ansprüche, **dadurch gekennzeichnet, dass** die Förderfläche (22) von einem umlaufenden Bandförderer als Förderorgan (12) gebildet ist.

9. Schneidwerk (4) nach einem der vorhergehenden Ansprüche, **dadurch gekennzeichnet, dass** die Schneidelemente (16) über einen Messerwinkel (34) mit der Schwinge (14) verbunden sind, wobei der Messerwinkel (34) als Profilblech ausgeführt ist, den Abstand zwischen den Schneidelementen (16) und der Förderfläche (22) überbrückt und aus mehreren über die Arbeitsbreite des Schneidwerks (4) aneinandergereihten Segmenten besteht, die gelenkig miteinander verbunden sind.

10. Schneidwerk (4) nach einem der vorhergehenden Ansprüche, **dadurch gekennzeichnet, dass** Abstützelemente (20) benachbarter Schwingen (14) durch einen oder mehrere schwenkbeweglich mit den Abstützelementen (20) verbundene Koppelstangen miteinander verbunden sind.

## Claims

1. A cutter bar (4) for mounting on a harvester (2) with a frame (6), the frame (6) having swing arms (14) pointing in the working direction, at the front ends of which cutting elements (16) for cutting the crop are fastened, the swing arms (14) with the cutting elements (16) fastened thereto being movable in height relative to the frame (6) and one or more support elements (20) are mounted on the swing arms (14), which support conveying surfaces (22) located above the swing arm (14), **characterized in that** at least one of the support elements (20) is longitudinally movably connected to the swing arm (14).

2. The cutter bar (4) according to claim 1, **characterized in that** one or more of the swing arms (14) are designed as leaf spring packs.

3. The cutter bar (4) according to any of the preceding claims,
**characterized in that** the conveying surfaces are fastened in the cutter bar (4) in such a manner that the front edge (36) of the conveying surfaces (22) facing the cutting elements (16) remains in a constant spatial relationship to the cutting elements (16) even during vertical movements of the cutting elements (16).

4. The cutter bar (4) according to any of the preceding claims,
**characterized in that** the longitudinally movable support element (20) is movably driven in its movement by one or more coupling rods (24) supported in the front portion of the swing arm (14) or the cutting element (16).

5. The cutter bar (4) according to any of the preceding claims,
**characterized in that** a holding element (26) is connected to the longitudinally movable support element (20b) and limits the movable conveying surface (22) and guides it via drivers (28).

6. The cutter bar (4) according to any of the preceding claims,
**characterized in that** a holding element (26) is connected to the longitudinally movable support element (20), which supports and guides a movable back wall (30) of the conveying path of the crop over the cutter bar (4).

7. The cutter bar (4) according to any of the preceding claims,
**characterized in that** the holding element seals the transition between the conveying surface and the back wall (30).

8. The cutter bar (4) according to any of the preceding claims,
**characterized in that** the conveying surface (22) is formed by a circulating belt conveyor as conveying organ (12).

9. The cutter bar (4) according to any of the preceding claims,
**characterized in that** the cutting elements (16) are connected to the swing arm (14) via a knife angle (34), wherein the knife angle (34) is designed as a profiled sheet, bridges the distance between the cutting elements (16) and the conveying surface (22) and consists of several segments arranged in a row over the working width of the cutter bar (4), which are hingedly connected to each other.

10. The cutter bar (4) according to any of the preceding claims,
**characterized in that** support elements (20) of adjacent swing arms (14) are connected to one another by one or more coupling rods pivotably connected to the support elements (20).

## Revendications

1. Mécanisme de coupe (4) destiné à être monté sur une moissonneuse (2) comportant un cadre (6), le cadre (6) présente des bielles oscillantes (14) pointant dans la direction de travail, sur l'extrémité avant desquelles sont fixés des éléments coupants (16) pour la coupe du produit de récolte, les bielles oscillantes (14) avec les éléments coupants (16) qui y sont attachés sont mobiles en hauteur par rapport au cadre (6), et un ou plusieurs éléments de support (20) sont posés sur les bielles oscillantes (14), lesquels supportent des faces de transport (22) situées au-dessus des bielles oscillantes (14),
**caractérisé en ce qu'au** moins un des éléments de support (20) est connecté mobile longitudinalement à la bielle oscillante (14).

2. Mécanisme de coupe (4) selon la revendication 1,
**caractérisé en ce qu'**une ou plusieurs des bielles oscillantes (14) sont formées comme des paquets de ressorts à lames.

3. Mécanisme de coupe (4) selon l'une des revendications précédentes,
**caractérisé en ce que** les faces de transport sont fixées de telle façon dans le mécanisme de coupe (4), que le bord avant (36) de faces de transport (22) faisant face aux éléments coupants (16) restent, même lors des mouvements en hauteur des éléments coupants (16), dans une relation spatiale constante avec les éléments coupants (16).

4. Mécanisme de coupe (4) selon l'une des revendications précédentes,
**caractérisé en ce que** l'élément de support (20) mobile longitudinalement est entraîné dans son mouvement par une ou plusieurs tiges d'accouplement (24), lesquelles sont appuyées dans la section avant des bielles oscillantes (14) ou de l'élément coupant (16).

5. Mécanisme de coupe (4) selon l'une des revendications précédentes,
**caractérisé en ce qu'**un élément de retenue (26) (26) est connecté à l'élément de support (20b) mobile longitudinalement, lequel délimite la face de transport (22) mobile et la guide sur des entraîneurs (28).

6. Mécanisme de coupe (4) selon l'une des revendications précédentes,
**caractérisé en ce qu'**un élément de retenue (26) est connecté à l'élément de support (20) mobile longitudinalement, lequel supporte et guide une paroi arrière (30) mobile du chemin de transport du produit de récolte à travers le mécanisme de coupe (4).

7. Mécanisme de coupe (4) selon l'une des revendications précédentes,
**caractérisé en ce que** l'élément de retenue étanchéifie le passage entre la face de transport et la paroi arrière (30).

8. Mécanisme de coupe (4) selon l'une des revendications précédentes,
**caractérisé en ce que** la face de transport (22) est formée par un transporteur à bande circulaire comme organe de transport (12).

9. Mécanisme de coupe (4) selon l'une des revendications précédentes,
**caractérisé en ce que** les éléments coupants (16) sont connectés par un angle de lame (34) à la bielle oscillante (14), l'angle de lame (34) étant formé comme une tôle profilée, pontant la distance entre les éléments coupants (16) et la face de transport (22) et étant composé de plusieurs segments alignés sur la largeur de travail du mécanisme de coupe (4), lesquels sont connectés de manière articulée les uns aux autres.

10. Mécanisme de coupe (4) selon l'une des revendications précédentes,
**caractérisé en ce que** les éléments de support (20) de bielles oscillantes (14) adjacentes sont connectés entre eux par une ou plusieurs tiges d'accouplement connectées de manière pivotante aux éléments de support (20).
